# EUROPÄISCHE PATENTSCHRIFT

(11) **EP 0 459 119 B1**
(45) Veröffentlichungstag und Bekanntmachung des Hinweises auf die Patenterteilung: **16.08.1995**
(21) Anmeldenummer: 91105906.1
(22) Anmeldetag: 13.04.1991
(51) Int. Cl.: G02B 6/26

(54) **Optische Einrichtung**
Optical device
Dispositif optique

(30) Priorität: 31.05.1990 DE 4017562
(43) Veröffentlichungstag der Anmeldung: 04.12.1991
(73) Patentinhaber: Alcatel SEL Aktiengesellschaft, D-70435 Stuttgart (DE)
(72) Erfinder: Schmuck, Harald, D-7000 Stuttgart 31 (DE); Veith, Gustav, Dr., D-7254 Hemmingen (DE)
(74) Vertreter: Pohl, Herbert, Dipl.-Ing.

(56) Entgegenhaltungen:
- EP-A- 0 013 974
- EP-A- 0 143 645
- EP-A- 0 216 211
- APPLIED OPTICS, Bd. 26, Nr. 3, 1. Februar 1987, New York US, Seiten 430-436; S.R. MALLINSON : 'Wavelength-selective filters for single-mode fiber WDM systems using Fabry-Perot interferometers'
- OPTICAL ENGINEERING, Bd. 24, Nr. 2, April 1985, Bellingham US, Seiten 275-284; H.S. SMITH et al.: 'Cryogenic servo-controlled infrared Fabry-Perot spectrometer"
- JAPANESE JOURNAL OF APPLIED PHYSICS, Bd. 26, Nr. 6, Juni 1987, Tokyo JP, Seiten 936-940; T. HIKITA et al.: 'A versatile spectrometer by the use of a pressure-scanned Fabry-Perot interferometer and a piezoelectrically-scanned Fabry-Perot in tandem arrangement'

## Beschreibung

Die Erfindung betrifft eine optische Einrichtung nach dem Oberbegriff des Patentanspruchs 1.

Seit langem ist bekannt, daß die theoretisch mögliche Übertragungskapazität einer Lichtleitfaser, insbesondere einer Einmoden-Lichtleitfaser, extrem hoch ist. Aufgrund dessen hat man versucht, die Bandbreite einer Lichtleitfaser durch die Benutzung von Einmoden-Lichtleitfasern, von schmalbandigen Laserquellen, durch Anwendung des Heterodyn-Verfahrens und durch Nachrichtenübertragung im Wellenlängen-Multiplexverfahren oder im Multiplexverfahren optischer Frequenzen im WDM (= Wavelength Division Multiplexing, und im OFDM- (= Optical Frequency Division Multiplexing) Betrieb auszunutzen. Auf diese Weise lassen sich mehrere Datenkanäle in einer Lichtleitfaser übertragen, die empfangsseitig durch optische Filter voneinander getrennt werden müssen.

Schmalbandige optische Filter ermöglichen es, in einem optischen übertragungssystem unerwünschte Signalanteile oder Rauschlicht zu unterdrücken und die Frequenz von Laserlicht zu stabilisieren.

Durchstimmbare, schmalbandige optische Filter sind unverzichtbare Hilfsmittel in der optischen Meßtechnik. Sie gestatten es, Linienbreite und Frequenz des von Lasern emittierten Lichts zu bestimmen.

Unter den optischen Filtern kommt den Fabry-Pérot-Interferometern wegen ihres einfachen Aufbaus eine große Bedeutung zu, da sie im Falle der Durchlässigkeit für eine bestimmte Wellenlänge nur eine geringe Dämpfung des erwünschten optischen Spektralbereiches verursachen und andere Spektralbereiche stark unterdrücken. Die spektrale Durchlässigkeit eines Fabry-Pérot-Interferometers stellt in Abhängigkeit von der Frequenz eine Kammfunktion dar und kann sehr schmalbandig sein. Der Abstand zwischen je zwei aufeinanderfolgenden Kamm-Peaks heißt Freier Spektralbereich (free spectral range); sie bestimmt sich durch die Länge des Resonatorhohlraums zwischen den Resonatorflächen des Fabry-Pérot-Interferometers, das den wesentlichen Bestandteil der optischen Einrichtung bildet. Diese ist so aufgebaut, daß sich der Abstand der Resonatorflächen des Fabry-Pérot-Interferometers mechanisch, thermisch oder elektro-optisch verändern läßt.

Die Güte (finesse) eines Fabry-Pérot-Interferometers stellt das Verhältnis zwischen dem Freien Spektralbereich und der Breite der Frequenz-Durchlaßkurve dar. Sie wird insbesondere durch die Reflektivität der verwendeten Spiegel bestimmt.

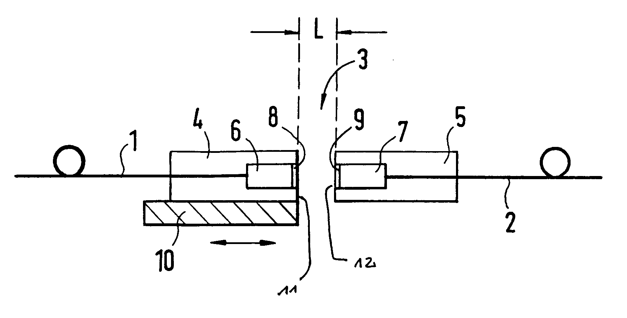

Eine derartige optische Einrichtung ist aus Applied Optics 26 (1987), S. 430 - 436, insbesondere S. 433, Fig. 3, bekannt.

Bei der dort beschriebenen Lösung breitet sich in einer Lichtleitfaser ein Lichtstrahl aus, der in einer mit dem Ende der Lichtleitfaser verbundenen Kollimatorlinse aufgeweitet wird, die hier das optische Abbildungsmittel bildet. Dann tritt er durch einen Luftraum auf eine erste Resonatorfläche eines Fabry-Pérot-Interferometers, von dieser durch den Resonatorhohlraum auf eine zweite Resonatorfläche und durch einen weiteren Luftraum auf eine zweite Kollimatorlinse, von der er, auf seinen ursprünglichen Durchmesser verschmälert, in eine zweite Lichtleitfaser gelangt.

Die Enden der Lichtleitfasern mit den an ihnen verbundenen Kollimatorlinsen und das Fabry-Pérot-Interferometer sind in die optische Einrichtung eingepaßt. Der Abstand zwischen den Resonatorflächen, d.h. die Resonatorlänge des Fabry-Pérot-Interferometers läßt sich durch ein piezoelektrisches Verschiebeglied einstellen. Nachteilhaft an dieser optischen Einrichtung ist, daß das Licht viermal eine Grenzfläche zwischen Glas und Luft durchläuft. - Zwei dieser Grenzflächen werden von den Kollimatorlinsen mit den sich an sie anschließenden Lufträumen gebildet, zwei von den Lufträumen mit den Platten, auf denen sich die Resonatorflächen des Fabry-Pérot-Interferometers befinden. Jede der Grenzflächen bewirkt eine zusätzliche Dämpfung. Um dies zu vermeiden, müssen die Kollimatorlinsen entspiegelt werden.

Nachteilhaft ist außerdem, daß sich die Resenatorlänge des Fabry-Pérot-Interferometers nur wenige Mikrometer in einem sehr begrenzten Bereich durchstimmen läßt.

Es ist die Aufgabe der vorliegenden Erfindung, eine optische Einrichtung zu schaffen, die eine geringere Dämpfung aufweist. Bei einer optischen Einrichtung der eingangs genannten Art wird diese Aufgabe, wie in Patentanspruch 1 angegeben, gelöst.

Vorteilhaft an der erfindungsgemäßen optischen Einrichtung ist insbesondere, daß sie in einen großen Wellenlängenbereich einsetzbar ist, weil durch das Entfallen der Lufträume zwischen den Resonatoroberflächen des Fabry-Pérot-Interferometers und optischen Aufweitungsmitteln, die sich jeweils an die Lichtleitfaser anschließen, innerhalb der optischen Einrichtung mehr Spielraum vorhanden ist, um den Resonatorraum des Fabry-Pérot-Interferometers einzustellen. Dadurch reicht der Freie Spektralbereich des Fabry-Pérot-Interferometers beispielsweise vom Megahertz- bis zum Terahertz-Bereich. Diese optische Einrichtung läßt sich leicht herstellen und gut justieren, weil gegenüber bekannten optischen Einrichtungen wenige zueinander bewegliche Bauteile vorhanden sind, wodurch auch eine höhere mechanische Stabilität erreicht wird.

Vorzugsweise ist eines der Abbildungsmittel mit einer der beiden Schichten, die die Spiegel bilden, in bezug auf die andere durch eine Antriebsvorrichtung bewegbar. Diese hat bevorzugt einen piezoelektrischen oder einen elektromechanischen Antrieb.

In einer weiteren bevorzugten Anordnung sind Mittel zur Ånderung des Brechungsindex des Mediums zwischen den einander zugewandten Oberflächen der Schichten vorhanden. Auch auf diese Weise läßt sich die optische Weglänge innerhalb des Resonatorhohlraums einstellen.

Anhand der einzigen Figur wird die Erfindung an einem Ausführungsbeispiel erläutert.

Eine optische Einrichtung (Figur) verbindet eine Lichtleitfaser 1 mit einer Lichtleitfaser 2 über ein Fabry-Pérot-Interferometer 3. Dabei sind die Enden der Lichtleitfasern 1, 2 jeweils in eine Hülse 4, 5 eingepaßt, die beispielsweise aus Metall bestehen. Innerhalb der Hülsen 4, 5 sind optische Abbildungsmittel 6, 7 mit den Enden der Lichtleitfasern 1, 2 mechanisch verbunden. Die optischen Abbildungsmlttel 6, 7 sind beispielsweise Stablinsen, insbesondere GRIN-Linsen. Deren den Enden der Lichtleitfasern 1, 2 abgewandte Oberflächen sind jeweils durch reflektierende Schichten 8, 9 bedeckt, welche die Spiegel bilden und die Resonatorflächen des Resonatorhohlraums darstellen der eine Länge L hat.

Außerdem ist eine Antriebsvorrichtung 10 vorhanden, durch die die das Ende der Lichtleitfaser 1 auf das Ende der Lichtleitfaser 2 hinzubewegt werden kann, so daß der Abstand L zwischen den Oberflächen 11, 12 sich verringert und sich die durch das Fabry-Pérot-Interferometer 3 durchgelassenen Frequenzen ändern.

Die Antriebsvorrichtung 10 kann beispielsweise piezoelektrischen Antrieb haben. Es kann auch ein elektromechanischer Antrieb, z.B. ein Schrittmotor, für den Antrieb geeignet sein. Die Lichtleitfaser 1 weist eine überschüssige Länge auf, so daß sich ihr Ende gegenüber dem Ende der Lichtleitfaser 1 in einem genügenden Spielraum bewegen läßt.

Die Länge L läßt sich bei einer derartigen optischen Einrichtung beispielsweise in einem Bereich zwischen wenigen Mikrometern und 200 Millimetern wählen. Dadurch ist es möglich, Freie Spektralbereiche von z.B. 750 MHz bis 50 THz einzustellen. Auch das Ende der Lichtleitfaser 2 kann mit einer Antriebsvorrichtung versehen sein.

Sofern sich die optische Einrichtung zusammen mit den Enden der Lichtleitfaser 1 in einer hermetisch dichten Anordnung befindet, können Mittel zur Änderung des Brechungsindex zwischen den Schichten 8, 9 vorhanden sein. Sofern Luft den Resonatorhohlraum ausfüllt, läßt sich deren Brechungsindex durch Änderung des Drucks ändern. Der Brechungsindex läßt sich auch thermisch, d.h. durch Ånderung der Temperatur beeinflussen.

## Patentansprüche

1. Optische Einrichtung für ein faser-optisches übertragungssystem, die die Enden einer ersten (1) und einer zweiten Lichtleitfaser (2) und ein dazwischen angeordnetes Fabry-Pérot-Interferometer (3) umfaßt, welches durch die einander zugewandten Oberflächen eines ersten und eines zweiten Spiegels im Strahlengang des zu übertragenden Lichts einen Resonatorhohlraum bildet, wobei ein erstes (6) und ein zweites optisches Abbildungsmittel (7) vorhanden sind, die jeweils mit dem dem Resonatorhohlraum zugewandten Ende der ersten (1) bzw. der zweiten Lichtleitfaser (2) verbunden sind wobei die Abbildungsmittel (6, 7) ebene Oberflächen aufweisen,
**dadurch gekennzeichnet,**
daß eine ebene Oberfläche des ersten optischen Abbildungsmittels (6) von einer den ersten Spiegel bildenden reflektierenden Schicht (8) überzogen ist und daß eine ebene Oberfläche des zweiten optischen Abbildungsmittels (7) ebenfalls von einer den zweiten Spiegel bildenden reflektierenden Schicht (9) überzogen ist.

2. Optische Einrichtung nach Anspruch 1, dadurch gekennzeichnet, daß wenigstens eines der Abbildungsmittel (6, 7) mit einer der Schichten (8, 9) in bezug auf das andere Abbildungsmittel durch eine Antriebsvorrichtung (12) bewegbar ist.

3. Optische Einrichtung nach Anspruch 2, dadurch gekennzeichnet, daß die Antriebsvorrichtung (10) einen piezoelektrischen Antrieb hat.

4. Optische Einrichtung nach Anspruch 2, dadurch gekennzeichnet, daß die Antriebsvorrichtung (10) einen elektromechanischen Antrieb hat.

5. Optische Einrichtung nach einem der vorhergehenden Ansprüche, dadurch gekennzeichnet, daß Mittel zur Änderung des Brechungsindex des Mediums zwischen den Schichten (8, 9) vorhanden sind.

## Claims

1. Optical device for a fibre-optical transmission system which device comprises the ends of a first optical waveguide (1) and a second optical waveguide (2) and a Fabry-Pérot interferometer (3) which is disposed in between and is formed by the mutually facing surfaces of a first and a second mirror in the beam path of the light to be transmitted formed, of a first optical imaging means (6) and a second optical imaging means (7) being provided which are each connected to that end of the first optical waveguide (1) and the second optical waveguide (2), respectively, which face the resonant cavity, the imaging means (6, 7) having flat surfaces characterized in that a flat surface of the first optical imaging means (6) is covered with a reflective coating (8) forming the first mirror, and in that a flat surface of the second optical imaging means (7) is also covered with a reflective coating (9) forming the second mirror.

2. An optical device according to Claim 1, characterized in that at least one of the imaging means (6, 7) with one of the coatings (8, 9) is movable relative to the other imaging means by an actuator (10).

3. An optical device according to Claim 2, characterized in that the actuator (10) has a piezoelectric drive.

4. An optical device according to Claim 2, characterized in that the actuator (10) has an electromechanical drive.

5. An optical device according to one of the preceding claims, characterized in that means are provided for changing the refractive index of the medium between the coatings (8, 9).

## Revendications

1. Dispositif optique pour un système de transmission optique par fibre, comportant les extrémités d'une première (1) et d'une seconde (2) fibres guides de la lumière et, disposé entre elles, un interféromètre de Fabry-Pérot (3) qui est conçu sous forme de cavité résonnante par les surfaces, orientées l'une vers l'autre, d'un premier et d'un second miroirs sur le chemin de la lumière à transmettre, dispositif dans lequel existent un premier (6) et un second (7) moyens optiques de formation de l'image qui sont, chacun, reliés avec l'extrémité, orientée vers la cavité résonnante, de la première (1) ou de la seconde (2) fibres guides de la lumière, les moyens (6, 7) de formation de l'image présentant des surfaces planes,
caractérisé,
par le fait qu'une surface plane du premier moyen optique (6) de formation de l'image est revêtue d'une couche réfléchissante (8) formant le premier miroir et par le fait qu'une surface plane du second moyen optique (7) de formation de l'image est également revêtue d'une couche réfléchissante (9) formant le second miroir.

2. Dispositif optique selon la revendication 1, caractérisé par le fait qu'au moins l'un des moyens (6, 7) de formation de l'image, avec l'une des couches (8, 9), peut se déplacer, au moyen d'un dispositif d'entraînement (12), par rapport à l'autre moyen de formation de l'image.

3. Dispositif optique selon la revendication 2, caractérisé parle fait que le dispositif d'entraînement (10) présente un entraînement piézo-électrique.

4. Dispositif optique selon la revendication 2, caractérisé par le fait que le dispositif d'entraînement (10) présente un entraînement électromécanique.

5. Dispositif optique selon l'une des revendications précédentes, caractérisé par le fait qu'il existe des moyens pour modifier l'indice de réfraction du milieu entre les couches (8, 9).
